# EUROPEAN PATENT APPLICATION

(11) **EP 3 300 214 A1**
(43) Date of publication of application: **28.03.2018**
(21) Application number: 17192300.6
(22) Date of filing: 21.09.2017
(51) Int. Cl.: H02K 1/16, B64C 13/50, H02K 16/04, H02K 1/14, H02K 3/28

(54) **REDUNDANT CHANNEL MOTOR AND METHOD**

(30) Priority: 23.09.2016 US 201615273841
(71) Applicant: Hamilton Sundstrand Corporation, Windsor Locks, CT 06096-1010 (US)
(72) Inventor: CARBONE, Michael, Rockford, IL 61107 (US); WILHIDE, Matthew L., Cherry Valley, IL 61016 (US); GIERAS, Jacek F., Glastonbury, CT 06033 (US)
(74) Representative: Gittins, Alex Michael

(57) **Abstract**

A redundant channel motor (10) includes a permanent magnet rotor (12). The motor (10) also includes a plurality of stator sectors (18) surrounding the permanent magnet rotor (12), each of the stator sectors (18) disposed in a common plane, independently wound, and capable of driving the load of the permanent magnet rotor (12) in the event of failure of one of the other stator sectors (18).

## Description

### BACKGROUND

The embodiments herein relate to motors and, more particularly, to a redundant channel motor, as well as methods associated therewith.

In primary flight control actuation applications on aircraft, redundant channels of operation are required to satisfy high reliability and flight safety requirements. As fly-by-wire designs are employed on new aircraft, or retrofitted onto existing aircraft, rotary or linear motions are required to control hydraulic actuators. These input motions replace mechanical linkages which were previously pilot generated. Because these forces are relatively low, motor cogging forces can be a large percentage of the applied load. Minimal cogging forces are therefore desirable.

Prior efforts have incorporated two or three motors which drive into a gear train or mechanism which combines their inputs into a single output. One such arrangement places two motors driving into a speed summing differential gear train. This arrangement requires the two separate motors, and their corresponding space claims and weight, as well as the differential gear train in order to combine the inputs. Due to the characteristics of an open differential, this architecture requires that when one of the channels or motors becomes disabled, the disabled motor must be held static with a brake to prevent back driving and lost motion at the output.

Another arrangement would place two or three motors on separate centerlines and connect their outputs with a linkage. This arrangement allows a mechanical problem with one motor to impact the combined output, requiring a form of disconnect clutch. The increased complexity of such a system reduces its combined reliability.

### BRIEF DESCRIPTION

According to one embodiment, a redundant channel motor includes a permanent magnet rotor. The motor also includes a plurality of stator sectors surrounding the permanent magnet rotor, each of the stator sectors disposed in a common plane, independently wound, and capable of driving the load of the permanent magnet rotor in the event of failure of one of the other stator sectors.

According to another embodiment, method of redundantly driving a motor is provided. The method includes driving a permanent magnet rotor with a first stator sector and a second stator sector, each of the stator sectors disposed in a common plane and independently wound. The method also includes continuing to drive the permanent magnet rotor with one of the stator sectors in the event of failure of one of the other stator sectors.

### BRIEF DESCRIPTION OF THE DRAWINGS

The subject matter which is regarded as the disclosure is particularly pointed out and distinctly claimed in the claims at the conclusion of the specification. The foregoing and other features and advantages of the disclosure are apparent from the following detailed description taken in conjunction with the accompanying drawings in which:
FIG. 1 is a sectional view of a redundant channel motor;
FIG. 2 is a partial perspective view of the redundant channel motor; and
FIG. 3 is a sectional view of the redundant channel motor illustrating a stator slot offset according to an aspect of the disclosure.

### DETAILED DESCRIPTION

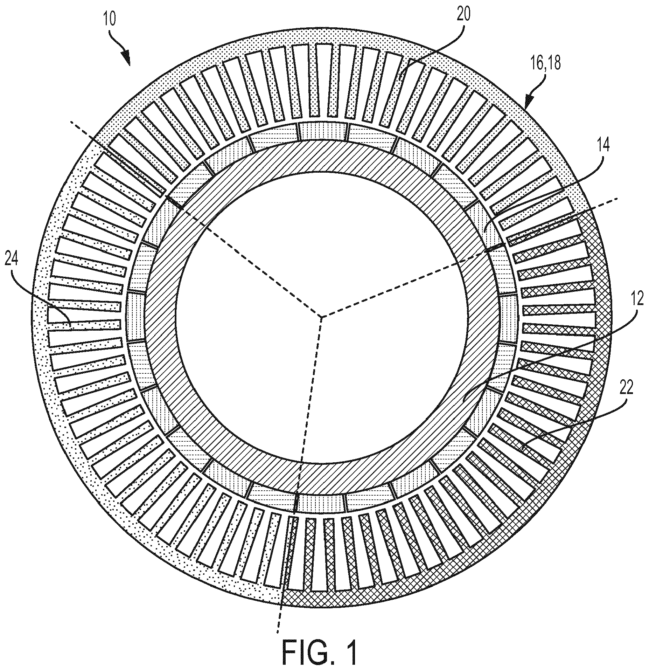

Referring to FIG. 1, a motor is illustrated and generally referenced with numeral 10. The motor 10 is physically similar to a brushless DC or AC permanent magnet motor, as it includes a rotor 12 that is cylindrical with permanent magnets 14 attached thereto and surrounded by stator coils. As will be appreciated from the description herein, a stator assembly 16 comprises a plurality of independent stators, referred to herein as stator sectors 18. In the illustrated embodiment, there are three stator sectors, specifically a first stator sector 20, a second stator sector 22 and a third stator sector 24. However, it is to be appreciated that it is contemplated that two or more stator sectors may be present in some embodiments.

The motor 10 may be used in numerous applications that require redundant channels of operation. In some embodiments, the motor 10 is employed as part of an actuator system on an aircraft. In particular, a fly-by-wire aircraft may particularly benefit from the embodiments of the motor 10 described herein.

As noted above, three stator sectors 20, 22 and 24 are included in the illustrated embodiment. The stator sectors are disposed in a common plane, are independently wound, and capable of driving the load of the rotor 12 in the event of failure of one of the other stator sectors. Each stator sector includes its own respective controller and electronics to ensure redundant functionality in the event of failure or unavailability of the other stator sector(s). For example, in operation all three stator sectors 20, 22 and 24 may be driving rotation of the rotor 12 prior to failure or unavailability of the third stator sector 24. Subsequent to loss of the third stator sector 24, the first and second stator sectors 20, 22 continue to drive the rotor 12. Furthermore, in the event of the failure or unavailability of the second stator sector 22, the first stator sector 20 is capable of independently driving the rotor 12. The preceding example is merely illustrative and it is to be understood that any combination of two stator sectors, or any single stator sector (second or third stator sector 22, 24), is capable of driving the rotor 12. Therefore, the stator assembly 16 may be viewed as three independent stators.

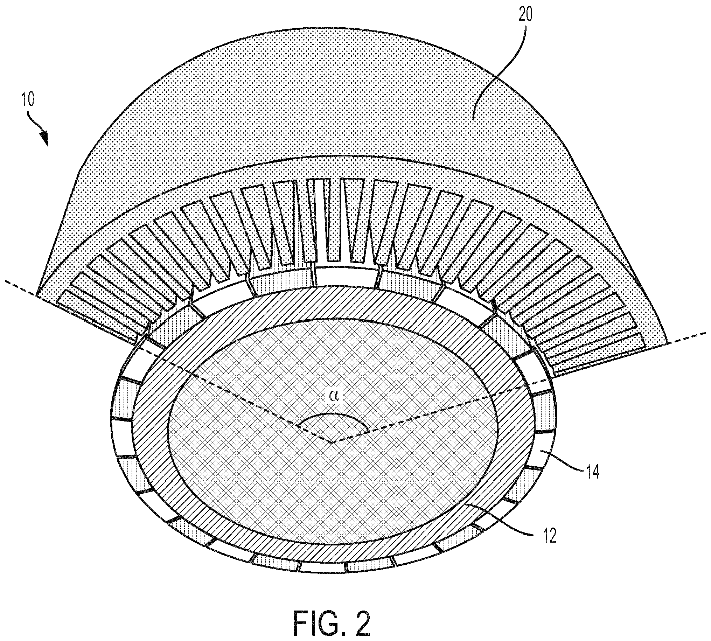

The three stator sectors are equally spaced around an entire circumference of the overall stator assembly 16. More particularly, each stator sector 20, 22 and 24 spans an angular distance of 120 degrees or substantially equal thereto. One segment spanning 120 degrees is illustrated in FIG. 2, with the angle of 120 degrees designated with α.

In fly-by-wire aircraft applications, pilot generated forces are generally small and therefore, under normal operating conditions, the output of the motor is also relatively a small amount of torque. In such cases, the potential is introduced for motor cogging forces to be a significant percentage of the load.

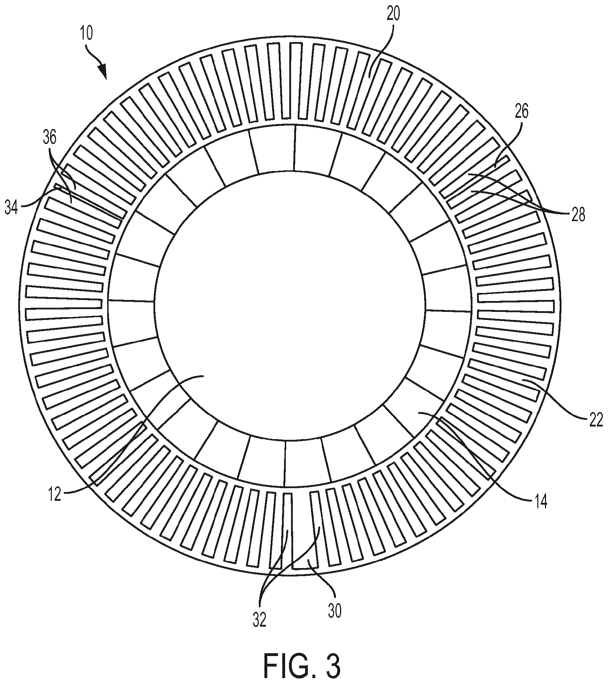

Referring to FIG. 3, to minimize the motor cogging forces present, the stator sectors 20, 22 and 24 are offset from equally spaced in some embodiments. A slot space between each stator sector interface is present. In particular, a first slot spacing 26 is defined by stator teeth 28 at a first interface between the first stator sector 20 and the second stator sector 22. A second slot spacing 30 is defined by stator teeth 32 at a second interface between the second stator sector 22 and the third stator sector 24. A third slot spacing 34 is defined by stator teeth 36 at a third interface between the third stator sector 24 and the first stator sector 20. At least one slot spacing 26, 30 and/or 34 is different than one other slot spacing to offset stator slots of the stator assembly 16. Specifically, each stator sector 20, 22 and 24 defines a plurality of stator slots having a slot pitch and the stator slots within each stator sector are substantially equally spaced. However, the slot spacing between each stator sector is offset in some embodiments. The offset of the stator slots is equal to one-third of the slot pitch in some embodiments. In the illustrated embodiment, this offset is achieved by having the first slot spacing 26 and the third slot spacing 34 are equal. These slot spacings are different than the second slot spacing 30, as shown.

Additional methods of cogging torque reduction are employed in some embodiments. For example, a slotless stator winding, skewed stator slots, bifurcated slots, dummy slots, teeth with different width of the active surface, and decented permanent magnets may be utilized.

Advantageously, the motor 10 provides redundancy without added complexity. In the case of failure of a single, or even two stators, the remaining stator continues to drive the load, with no clutching or disconnect functions required. Additionally, overall weight reduction is achieved because the three stators are integrated into a single motor housing. This allows for the stators to share one rotor with magnets, one pair of rotor bearings, and one support structure. Furthermore, motor cogging torque is reduced. This smooths the motor response, especially under light load conditions.

While the disclosure has been described in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the scope of the disclosure. Additionally, while various embodiments of the disclosure have been described, it is to be understood that aspects of the disclosure may include only some of the described embodiments. Accordingly, the disclosure is not to be seen as limited by the foregoing description, but is only limited by the scope of the appended claims.

## Claims

1. A redundant channel motor (10) comprising:
a permanent magnet rotor (12); and
a plurality of stator sectors (18) surrounding the permanent magnet rotor (12), each of the stator sectors (18) disposed in a common plane, independently wound, and capable of driving the load of the permanent magnet rotor (12) in the event of failure of one of the other stator sectors (18).

2. The redundant channel motor (10) of claim 1, wherein the plurality of stator sectors (18) comprises a first stator sector (20), a second stator sector (22) and a third stator sector (24).

3. The redundant channel motor (10) of claim 2, wherein the first stator sector (20), the second stator sector (22) and the third stator sector (24) each extend 120 degrees around the permanent magnet rotor (12).

4. The redundant channel motor (10) of claim 2 or 3, further comprising:
a first slot spacing (26) defined by stator teeth (28) at a first interface between the first stator sector (20) and the second stator sector (22);
a second slot spacing (30) defined by stator teeth (32) at a second interface between the second stator sector (22) and the third stator sector (24); and
a third slot spacing (34) defined by stator teeth (36) at a third interface between the third stator sector (24) and the first stator sector (20);
wherein at least one slot spacing (26,30,34) is different than one other slot spacing (26,30,34) to offset the stator slots of each stator sector (20,22,24).

5. The redundant channel motor (10) of claim 4, wherein the first slot spacing (26) and the third slot (34) spacing are equal, the second slot spacing (30) being different than the first slot spacing (26) and the third slot spacing (34).

6. The redundant channel motor (10) of claim 4 or 5, wherein the first stator sector (20) defines a first plurality of stator slots, the second stator sector (22) defines a second plurality of stator slots, and the third stator sector (24) defines a third plurality of stator slots, each of the first, second and third stator slots having a slot pitch, wherein the offset is equal to one-third of the slot pitch.

7. The redundant channel motor (10) of any preceding claim, wherein each of the stator sectors (18) are in operative communication with an independent controller.

8. The redundant channel motor (10) of any preceding claim, wherein the motor (10) is included in an actuator system of an aircraft.

9. The redundant channel motor (10) of claim 8, wherein the aircraft is a fly-by-wire aircraft.

10. The redundant channel motor (10) of any preceding claim, wherein the plurality of stator sectors (18) are redundant such that the motor (10) is operable when only one of three stator sectors (20,22,24) is operational.

11. A method of redundantly driving a motor (10) comprising:
driving a permanent magnet rotor (12) with a first stator sector (20) and a second stator sector (22), each of the stator sectors (20,22) disposed in a common plane and independently wound; and
continuing to drive the permanent magnet rotor (12) with one of the stator sectors (20,22) in the event of failure of one of the other stator sectors (20,22).

12. The method of claim 11, further comprising:
driving the permanent magnet rotor (12) with the first stator sector (20), the second stator sector (22) and a third stator sector (24), each of the stator sectors (20,22,24) disposed in a common plane and independently wound; and
continuing to drive the permanent magnet rotor (12) with less than all three stator sectors (20,22,24) in the event of failure of at least one of the other stator sectors (20,22,24).

13. The method of claim 12, further comprising driving the permanent magnet rotor (12) with a single stator sector (20,22,24) in the event of failure of the other two stator sectors (20,22,24).

14. The method of claim 12 or 13, further comprising offsetting the stator sectors (20,22,24) by a distance equal to one-third of a slot pitch of a plurality of slots defined by the stator sectors (20,22,24).

15. The method of any of claims 11 to 14, further comprising redundantly driving the motor (10) to drive an actuator system of a fly-by-wire aircraft.
